# EUROPÄISCHE PATENTANMELDUNG

(11) **EP 0 844 417 A2**
(43) Veröffentlichungstag der Anmeldung: **27.05.1998**
(21) Anmeldenummer: 97120161.1
(22) Anmeldetag: 18.11.1997
(51) Int. Cl.: F16H 57/08, F16D 25/0638

(54) **Planetenträger eines Planetengetriebes**

(30) Priorität: 21.11.1996 DE 19648124
(71) Anmelder: Auto Heinen Automobiltechnik GmbH & Co., 53902 Bad Münstereifel (DE)
(72) Erfinder: Bell, Rolf Carl, Dipl.-Ing., 53879 Euskrichen (DE); Brokamp, Karl-Heinz, 53881 Euskirchen (DE)
(74) Vertreter: Bauer, Hubert, Dipl.-Ing.

(57) **Zusammenfassung**

Ein Planetenträger eines Planetengetriebes besteht aus einem Carrier, der mit einem Wellenzapfen zur Drehmomenteinleitung versehen ist, und einem koaxial zu dem Carrier angeordneten Flansch (1), der an seiner Mantelaußerfläche (2) einer Splines-Verzahnung zur Abstützung einer daran angepaßten Lamelle (4) einer Kupplung zur Drehmomentableitung aufweist. Der Carrier und der Flansch (1) sind drehmomentfest miteinander gekoppelt und nehmen jeweils einen Lagerbolzen von achsparallel zwischen dem Carrier und dem Flansch (1) angeordneten Planetenrädern auf. Um einen derartigen Planetenträger kostengünstig herstellen zu können wird vorgschlagen, daß der Carrier und der Flansch (1) aus Druckguß-Aluminium hergestellt sind und die Splines-Verzahnung des Flansches (1) gänzlich unbearbeitet ist.

## Beschreibung

Die Erfindung betrifft einen Planetenträger eines Planetengetriebes mit einem Carrier, der mit einem Wellenzapfen zur Drehmomenteinleitung versehen ist, und einem koaxial zu dem Carrier angeordneten Flansch, der an seiner Mantelaußenfläche eine Splines-Verzahnung zur Abstützung einer daran angepaßten Lamelle einer Kupplung zur Drehmomentableitung aufweist, wobei der Carrier und der Flansch drehmomentfest miteinander gekoppelt sind und jeweils einen Lagerbolzen von achsparellel zwischen dem Carrier und dem Flansch angeordneten Planetenrädern aufnehmen.

Derartige Planetenträger sind allgemein bekannt und werden in der Regel als Gußteile aus Stahl gefertigt. Da sich diese Planetenträger auf gießtechnischem Weg nicht mit ausreichender Maßgenauigkeit fertigen lassen und außerdem die Oberflächenqualität nicht den geforderten Ansprüchen genügt, müssen die Planetenträger gemäß dem Stand der Technik nach dem Gießvorgang spanend nachbearbeitet werden. Insbesondere müssen die als Anlageflächen der Kupplungslamellen dienenden Flanken der Zähne der Splines-Verzahnung an der Mantelaussenfläche des Flansches durch Räumen auf die Fertigmaße bearbeitet werden. Diese vergleichsweise komplizierte und zeitaufwendige Endbearbeitung von Flansch und Carrier der bekannten Planetenträger stellt eine nicht unerhebliche Komponente der Gesamtkosten dar.

Der Erfindung liegt die Aufgabe zugrunde, einen Planetenträger vorzuschlagen, der sich deutlich kostengünstiger herstellen läßt und dennoch sämtliche Anforderungen hinsichtlich Festigkeit und Dauerhaltbarkeit erfüllt.

Ausgehend von einem Planetenträger der eingangs beschriebenen Art wird diese Aufgabe erfindungsgemäß dadurch gelöst, daß der Carrier und der Flansch aus Druckguß-Aluminium hergestellt sind und die Splines-Verzahnung des Flansches gänzlich unbearbeitet ist.

Aufgrund der Herstellung des erfindungsgemäßen Planetenträgers aus Druckguß-Aluminium lassen sich die Herstellkosten deutlich senken, was insbesondere auch daraus resultiert, daß keinerlei spanende Nachbearbeitung des Carriers oder des Flansches erforderlich ist, da sich die vorgenannten Bauteile auf druckgußtechnischem Wege mit einer sehr großen Maßgenauigkeit fertigen lassen. Selbst die Splines-Verzahnung des Flansches kann gänzlich unbearbeitet bleiben, weshalb die nicht unerheblichen Kosten für das nach dem Stand der Technik bei Stahl-Flanschen erforderliche Räumen nunmehr entfallen. Die nicht erforderliche Nachbearbeitung der Splines-Verzahnung hat des weiteren den entscheiden Vorteil, daß die durch die gußtechnische Herstellung entstehende Gußhaut an der Oberfläche des Flansches erhalten bleibt und somit die zur Abstützung der Lamellen erforderliche Festigkeit bietet. Durch Dauerhaltbarkeitsversuche mit dem erfindungsgemäßen Planetenträger konnte nachgewiesen werden, daß die unbearbeiteten Zahnflanken der Splines-Verzahnung die geforderte Lastwechselzahl schadlos überstehen.

Aufgrund der druckgußtechnischen Herstellung mittels Dauerformen ist es erforderlich, daß unter anderem die Zähne der Splines-Verzahnung mit Entformungsschrägen versehen sind, um das fertiggegossene Bauteil überhaupt aus der Druckgußform entnehmen zu können. Diese Entformungsschrägen an den Zähnen, die sich in Form einer Schrägstellung der Zahnflanken in bezug auf die Längsachse des Flansches bzw. des Carriers äußert, erleichtert das Lösen der Lamellen der Kupplung. Das Öffnen der Kupplung erfolgt in der Regel mittels Federkraft, wozu üblicherweise eine Tellerfeder verwendet wird. Während beim Schließvorgang der Kupplung, der im Falle einer hydraulisch betätigten Kupplung durch Aufbringung des entsprechenden Öldrucks erfolgt, das Auflaufen der Lamellen auf die Entformungsschrägen an den Zahnflanken keinerlei Probleme darstellt, wirkt sich das Ablaufen der Lamellen von den schrägen Flanken unterstützend auf den per Federkraft bewirkten Öffnungsvorgang der Kupplung aus.

Einen hinsichtlich der Entformbarkeit des Flansches und der Betätigbarkeit der Kupplung zu bevorzugenden Kompromiß stellt es dar, wenn die gegenüberliegenden Flanken jedes Zahnes der Splines-Verzahnung einen Winkel von 2° bis 4° miteinander einschließen und die Winkelhalbierende zwischen den Flanken jeweils eines Zahnes parallel zu der Längsachse des Flansches bzw. des Carriers verläuft.

Schließlich wird gemäß der Erfindung noch vorgeschlagen, daß die Lamelle zum Öffnen der Kupplung axial in die Richtung bewegbar ist in die sich die Zähne der Splines-Verzahnung verjüngen.

Eine derartige Ausrichtung der Entformungsschrägen ist dann zu bevorzugen, wenn - wie bei hydraulisch betätigten Kupplungen von stufenlosen Automatikgetrieben für PKW üblich - das Öffnen der Kupplung durch Federkraft erfolgt, während zum Schließen der Kupplung eine Beaufschlagung mit Öldruck erfolgt.

Die Erfindung wird nachfolgend anhand eines Ausführungsbeispiels eines Flansches des Planetenträgers, der in der Zeichnung in Form einer Prinzipskizze dargestellt ist, näher erläutert. Es zeigt:
- Figur 1: eine Seitenansicht eines Flansches mit einer im Eingriff befindlichen Kupplungslamelle und
- Figur 2: eine Draufsicht auf die mit einer Splines-Verzahnung versehene Mantelaußenfläche des Flansches mit einem im Schnitt dargestellten Abschnitt der Lamelle.

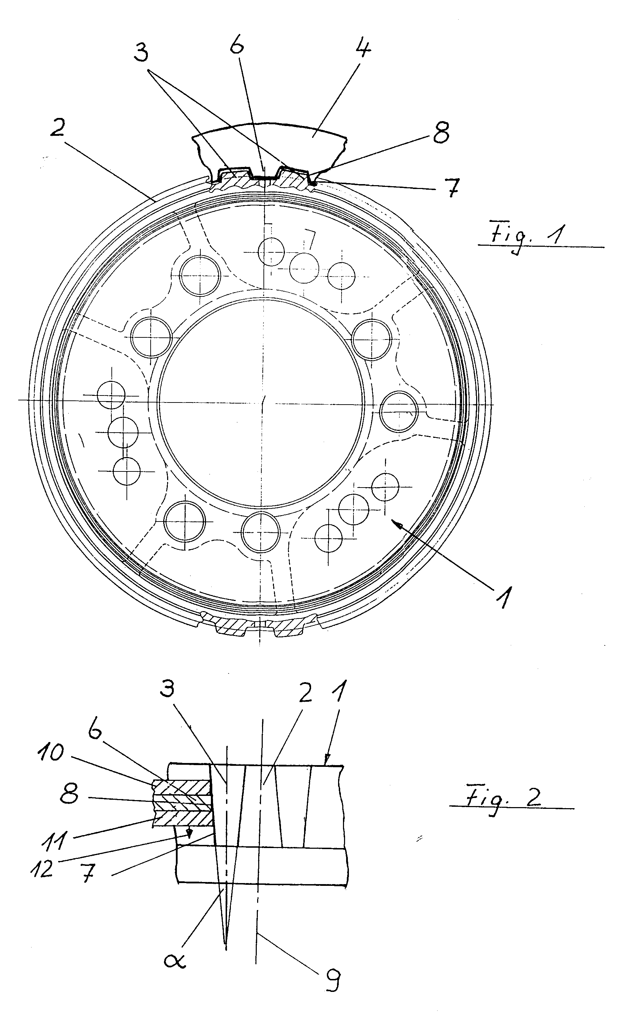

Figur 1 zeigt eine prinzipielle Darstellung eines Flansches 1 eines Planetenträgers eines Planetengetriebes. Der Flansch 1 und ein in der Zeichnung nicht dargestellter Carrier des Planetenträgers sind mit Hilfe von Schrauben miteinder verbunden und besitzen jeweils Lagerbohrungen für in der Zeichnung ebenfalls nicht abgebildeten Planetenräder, die sich zwischen dem Flansch 1 und dem Carrier befinden.

Der Flansch 1 ist an seiner Mantelaußenfläche mit einer Vielzahl von Zähnen 3 einer Splines-Verzahnung versehen. Die Zähne 3 der Splines-Verzahnung weisen einen im wesentlichen trapezförmigen Querschnitt auf und sind an der Mantelaußenfläche 2 des Flansches 1 umlaufend in regelmäßigen Abständen angeordnet.

Der Splines-Verzahnung der Mantelaußenfläche 2 des Flansches 1 angepaßt ist koaxial mit dem Flansch 1 eine Lamelle 4 einer Kupplung angeordnet. Die Mantelinnenfläche der Lamelle 4 ist mit einer Vielzahl von Zähnen 6 versehen, die eine geringfügig kleinere Breite besitzen als die Zwischenräume zwischen den Zähnen 3 an der Mantelaußenfläche 2 des Flansches 1. Aufgrund des somit vorliegenden Formschlusses zwischen der Lamelle 4 und dem Flansch 1 läßt sich zwischen beiden vorgenannten Bauteilen ein Drehmoment übertragen. Dabei stützt sich jeweils eine Flanke 7 eines Zahnes 3 des Flansches 1 an einer Flanke 8 eines Zahnes 6 der Lamelle 4 ab.

Figur 2 zeigt eine Draufsicht auf die Mantelaußenfläche 2 des Flansches 1, an der die Zähne 3 der Splines-Verzahnung ausgebildet sind. Die Flanken 7 der Zähne 3 verlaufen dabei nicht parallel mit einer Drehachse 9 des Flansches 1, sondern sind hierzu um einen Winkel von 1,5° geneigt. Gegenüberliegende Flanken 7 desselben Zahnes 3 schließen somit einen Winkel α von 3° ein. Die Neigung der Flanken 7 der Zähne 3 in bezug auf die Drehachse 9 des Flansches 1 ist in Figur 2 zur besseren Verdeutlichung stark übertrieben dargestellt. In Wirklichkeit ist die Schrägstellung der Flanken mit bloßem Auge nicht zu erkennen.

Auf der linken Seite der Figur 2 ist im Schnitt ein Zahn 6 der Lamelle 4 dargestellt, der sich mit seiner Flanke 8 an der Flanke 7 des linken Zahnes 3 abstützt. Aufbeiden Seiten der Lamelle 1 ist jeweils eine ringförmige Kupplungsscheibe 10 und 11 angeordnet, von denen eine zum Vorwärts- und die andere zum Rückwärtsfahren dient. Zum Lösen der Kupplungsscheibe 10 wird das aus der Lamelle 4 und den Kupplungsscheiben 10 und 11 bestehende Paket axial in Richtung des Pfeiles 12 verschoben. Diese Bewegung wird durch die Kraft einer nicht dargestellten Tellerfeder bewirkt und durch das Ablaufen der Lamelle 6 von den geneigten Flanken 7 der Zähne 3 unterstützt. Die Zähne 6 der Lamelle 4 bestehen aus Stahl, während der Flansch 1 einschließlich der Zähne 3 aus Aluminiumdruckguß gefertigt ist. Da der Flansch 1 jedoch nach dem Gießvorgang gänzlich unbearbeitet bleibt und die Flanken 7 der Zähne 3 daher noch mit einer harten Gußhaut versehen sind, kommt es trotz der Drehmomentübertragung zwischen der Lamelle 4 und den Zähnen 3 der Splines-Verzahnung zu keinerlei übermäßigen Verschleißerscheinungen. Die Dauerhaltbarkeit des erfindungsgemäßen Flansches 1 aus Aluminiumdruckguß konnte anhand verschiedener Belastungstests nachgewiesen werden.

## Patentansprüche

1. Planetenträger eines Planetengetriebes mit einem Carrier, der mit einem Wellenzapfen zur Drehmomenteinleitung versehen ist, und einem koaxial zu dem Carrier angeordneten Flansch, der an seiner Mantelaußenfläche einer Splines-Verzahnung zur Abstützung einer daran angepaßten Lamelle einer Kupplung zur Drehmomentableitung aufweist, wobei der Carrier und der Flansch drehmomentfest miteinander gekoppelt sind und jeweils einen Lagerbolzen von achsparallel zwischen dem Carrier und dem Flansch angeordneten Planetenrädern aufnehmen, dadurch gekennzeichnet, daß der Carrier und der Flansch (1) aus Druckguß-Aluminium hergestellt sind und die Splines-Verzahnung des Flansches (1) gänzlich unbearbeitet ist.

2. Planetenträger nach Anspruch 1, dadurch gekennzeichnet, daß die gegenüberliegenden Flanken (7) jedes Zahnes (3) der Splines-Verzahnung einen Winkel α von 2° bis 4° miteinander einschließen und die Winkelhalbierende zwischen den Flanken (7) jeweils eines Zahnes (3) parallel zu der Längsachse (9) des Flansches (1) und des Carriers verläuft.

3. Planetenträger nach Anspruch 1 oder 2, dadurch gekennzeichnet, daß die Lamelle (4) zum Öffnen der Kupplung axial in die Richtung bewegbar ist, in die sich die Zähne (3) der Splines-Verzahnung verjüngen.
